# DEMANDE DE BREVET EUROPEEN

(11) **EP 4 506 323 A1**
(43) Date de publication de la demande: **12.02.2025**
(21) Numéro de dépôt: 24188879.1
(22) Date de dépôt: 16.07.2024
(51) Int. Cl.: C05F 3/00, C05F 3/06

(54) **PROCÉDÉ D HYGIÉNISATION D'UN SOUS-PRODUIT ANIMAL**

(30) Priorité: 17.07.2023 FR 2307621
(71) Demandeur: Terrial, 35170 Bruz (FR)
(72) Inventeur: CHEVAILLIER, Xavier, 56700 HENNEBONT (FR); PICOT, Anne, 35310 BREAL SOUS MONTFORT (FR)
(74) Mandataire: LLR

(57) **Abrégé**

Procédé pour hygiéniser un sous-produit animal par traitement thermique, caractérisé en ce que le traitement thermique est effectué dans un conditionneur thermique et comprend une étape de chauffage par contact direct du sous-produit avec une surface conductrice solide d'un élément chauffant du conditionneur. Le sous-produit animal traité thermiquement est ensuite refroidi à l'aide d'un dispositif de refroidissement.

## Description

### Domaine de l'invention

L'invention porte sur un procédé industriel d'hygiénisation d'un sous-produit animal, qui permet la valorisation dudit produit notamment en tant que fertilisant tout en limitant les désagréments environnementaux (odeurs...).

### Description de l'art antérieur

Les effluents d'élevage peuvent contenir des micro-organismes pathogènes et leur destruction est essentielle pour limiter les risques sanitaires liés à l'épandage de ces effluents sur les terres agricoles. Par exemple, les fientes de volailles constituent des vecteurs privilégiés de la salmonelle ou autres bactéries pathogènes.

La réglementation sanitaire de l'Union Européenne sur les sous-produits animaux et produits dérivés prévoit que certains de ces sous-produits puissent être valorisés pour produire des engrais organiques ou amendements. Pour ces matières présentant un risque sanitaire, une étape de transformation (définie dans la présente demande par le terme hygiénisation) est nécessaire préalablement à leur utilisation, plus particulièrement leur utilisation en mélange. Ainsi, pour la fabrication d'engrais ou d'amendements organiques élaborés (par exemple sous la forme de granulés), les produits d'élevage doivent avoir un statut transformé (hygiénisé) pour être utilisés (Règlements (UE) 1069/2009 et (CE) 142/2011). Au niveau règlementaire, ce statut transformé s'obtient par un traitement thermique (chauffage) de la matière à une température à coeur minimale de 70°C et pendant une durée minimale de 60 minutes.

La technique du compostage est souvent autorisée par dérogation mais ne garantit pas la destruction totale de tous les germes pathogènes (Socrate A., 2000). Par ailleurs, ce procédé de transformation biologique des matières organiques par fermentation consistant à mettre les effluents en andain et à réaliser plusieurs retournements qui vont permettre une bonne oxygénation et une montée en température n'est pas simple à maîtriser. Le produit à composter doit également contenir suffisamment d'eau pour permettre la fermentation ; or ce niveau d'humidité n'est pas toujours compatible avec l'utilisation ultérieure du produit, par exemple pour sa granulation.

Il existe ainsi différents procédés permettant de réduire les populations microbiennes pathogènes de ces matières. Des études ont porté sur des traitements chimiques (acides, urée, chlore, chaux...) qui peuvent s'avérer intéressants mais les produits obtenus ne peuvent généralement pas être utilisés en agricultures biologiques. Les méthodes les plus efficaces semblent être celles basées sur des traitements thermiques (e.g., pasteurisation, stérilisation).

Les procédés actuels de séchage des fientes par contact entre les fientes et l'air chaud réalisés en élevage ne sont à eux seuls pas suffisants pour garantir une hygiénisation efficace des produits (Derel et Aubert, 2008). En outre, ces procédés utilisant de l'air chaud génèrent de gros volumes d'air qu'il faut ensuite traiter pour éliminer les mauvaises odeurs.

Kim *et al.*, 2012, a étudié l'inactivation par chauffage dans un four des salmonelles contenues dans de la fiente de volaille à différentes températures, différents taux d'humidité et selon la composition des fientes. Ce procédé par convection et radiation thermique n'est cependant pas industrialisable.

US2019/0117804 (Detzel) décrit l'utilisation d'une tour de "refroidissement", tour qui est modifiée pour devenir une tour de chauffage et qui est utilisée pour l'hygiénisation de granulés de sous-produits animaux. Les sous-produits animaux sont versés en haut de la colonne et tombent continuellement dans la tour jusqu'à une vis de décharge. Ils entrent en contact avec des serpentins chauffés. Ce dispositif ne décrit pas de moyens d'agitation où de mélange permettant le brassage des sous-produits. Ce dispositif présente différents inconvénients : il peut se produire un effet de mottage ou de croutage du fait de l'écoulement silo (en entonnoir) où une partie du sous-produit reste fixée sur les serpentins chauffant les rendant ainsi inefficaces. De plus il est possible que du sous-produit ne touche pas les serpentins et ne soit donc pas d'hygiénisé. Au minimum ce dispositif nécessite un surchauffage pour atteindre la température d'hygiénisation souhaitée et donc une grande déperdition d'énergie.

WO02/24585 (SEGHERS BETTER TECHNOLOGY GROUP) décrit un procédé de pelletisation par séchage de boues et non un procédé d'hygiénisation. En particulier le produit de départ à traiter est un liquide ou un semi liquide et non un produit solide.

WO2012115589A1 (TELGE NÄT AB) décrit l'utilisation de réacteurs pour hygiéniser un sous-produit animal liquide en utilisant un bio-réacteur mélangeur. Ce dispositif n'utilise pas de conditionneur thermique et porte lui aussi sur le traitement de sous-produits animaux ou humains liquides.

US 2020/0346989 décrit un dispositif pour obtenir des biosolides de classe A par digestion anaérobie, ces biosolides ayant une faible teneur en salmonelles et pouvant éventuellement provenir d'élevages de volailles. Cependant, ce document ne décrit pas l'obtention de solides hygiénisés provenant de sous-produits solides tels que de la fiente de volaille, du fumier de volaille, du compost avicole ou du frass d'insectes et présentant une charge d'entérocoques inférieure à 500 UFC/g ainsi qu'une absence de salmonelle.

Une demande de brevet européen No.23152130.3 portant sur un procédé d'hygiénisation a été déposée par le Demandeur le 18 janvier 2023. Ce document, publié sous le numéro EP4212486, fait donc partie de l'état de la technique uniquement dans les limites des dispositions de l'article 94(3) CBE.

Il existe donc un besoin de proposer un procédé d'hygiénisation des sous-produits animaux qui soit industrialisable et qui réponde à plusieurs critères :
- procédé répondant à la réglementation sanitaire : le procédé devant facilement permettre de contrôler la température de la matière à traiter (minimum 70°C au coeur du produit selon le règlement en vigueur à la date de dépôt de la présente invention) et la durée (minimum 60 minutes selon le règlement en vigueur à la date de dépôt de la présente invention) ;
- la prise en compte des propriétés de certaines matières à hygiéniser telles que les effluents d'élevage (en particulier les fientes de volailles) : risque de croutage (cimentation) de la matière, risque de corrosion et d'abrasivité ;
- la valeur agronomique du produit obtenu par le procédé : teneur en azote (N), teneur en humidité, *etc.* Par exemple, pour pouvoir granuler les fientes de volailles, la teneur en humidité du produit obtenu est un critère important, dans la mesure où les fientes ne doivent pas être trop humides ;
- des sous-produits animaux hygiénisés présentant une bonne conservation lors de leur stockage à température ambiante.

### Description de l'invention

De manière surprenante, il est apparu que l'utilisation d'un conditionneur thermique (ou cuiseur) permet une hygiénisation efficace au niveau industriel de sous-produits animaux, et en particulier de sous-produits animaux solides. L'ajout d'une étape de refroidissement suivant l'étape de traitement thermique permet une bonne conservation à température ambiante des sous-produits animaux hygiénisés.

Ce procédé présente en outre plusieurs avantages :
- Les risques en termes de sécurité et d'environnement (niveaux de poussière, buée, odeur et encrassement) sont limités. A titre comparatif, le Demandeur a testé un procédé dans lequel a été mis en oeuvre un réacteur comprenant une vis convoyeuse dans lequel des fientes de volailles ont été traitées thermiquement par injection de vapeur ou d'air chaud dans le réacteur. Ce procédé d'hygiénisation avec des flux d'air importants est peu adapté du fait du dégagement de mauvaises odeurs provenant des fientes traitées ainsi que de la consommation énergétique importante.
- Adaptation du procédé aux contraintes industrielles en usine : encombrement, débit, automatisation satisfaisants. Le Demandeur a aussi observé l'absence de croutage et de mottage de la matière traitée sur les parois du conditionneur. A titre comparatif, le réacteur comprenant une vis convoyeuse testé par le Demandeur tel que décrit ci-dessus n'a pas été concluant dans la mesure où la maîtrise des débits (taux de remplissage du réacteur) et des temps de séjour de la matière n'ont pas été satisfaisants.
- Aspect économique du procédé : investissement et coût d'exploitation limités, notamment en raison du chauffage de la matière à traiter par contact direct avec l'élément de chauffage du conditionneur et du fait que le fluide caloporteur du conditionneur circule en circuit fermé, par rapport à des procédés utilisant de la vapeur ou de l'air chaud en contact direct avec la matière à traiter tels que testés par le Demandeur.

Ainsi un aspect de l'invention est un procédé pour hygiéniser un sous-produit animal, et en particulier un sous-produit solide, par traitement thermique, caractérisé en ce que le traitement thermique est réalisé dans un conditionneur thermique, ledit conditionneur thermique comprenant une enceinte, au moins un élément chauffant solide (4) présentant, à l'intérieur de l'enceinte,
- une surface de contact direct (surface conductrice solide) avec une matière solide à chauffer qui permet la conduction de la chaleur,
- des moyens pour maintenir ladite surface chauffante à une température de chauffage souhaitée, et
- des moyens de guidage (6) pour brasser, mélanger et/ou malaxer ladite matière solide à chauffer sur ladite surface de contact,

ledit procédé comprend une étape de chauffage par contact direct du sous-produit avec ladite surface conductrice dudit élément chauffant solide dudit conditionneur et où le sous-produit animal à hygiéniser présente un taux de matière sèche d'au moins 45% en masse,
et où le sous-produit animal traité thermiquement présente une température d'au moins 70°C et est alors refroidi à l'aide d'un dispositif de refroidissement.

Par refroidissement, on entend un refroidissement actif par opposition à un refroidissement naturel du sous-produit animal qui a été traité thermiquement. Le refroidissement naturel, ou passif, consiste à laisser le produit exposé à l'atmosphère ambiante sans favoriser les échanges thermiques par l'application de moyens principalement destinés à favoriser ou accélérer l'abaissement de la température du produit et/ou l'équilibre thermique du produit avec son environnement.

Avantageusement, le sous-produit animal qui a été traité thermiquement est refroidi à une température inférieure à 50°C, de préférence inférieure à 45°C, de préférence encore inférieure à 40°C, en moins de 48 heures et par ordre croissant de préférence en moins de 24h, 12h, 6h, 1h, 30 minutes, 15 min, 10 min, 5 min, 3 min.

De préférence, le sous-produit animal qui a été traité thermiquement et présentant une température comprise entre 70°C et 90°C, en particulier entre 70°C et 80°C, est refroidi à une température inférieure à 45°C, en particulier entre 30°C et 45°C, en moins de 5 min.

Cette étape de refroidissement permet de stocker en sécurité à température ambiante le sous-produit animal qui a été traité thermiquement (e.g., en prévenant un risque d'incendie du sous-produit, en évitant aux opérateurs de manipuler un produit chaud) tout en préservant sa qualité (e.g., en évitant la prise en masse, la contamination microbienne et/ou la fermentation du sous-produit).

Les conditionneurs thermiques (également appelés chauffoirs ou cuiseurs) sont des dispositifs de chauffage par conduction qui sont classiquement mis en oeuvre pour le prétraitement des graines oléagineuses dans le but de faciliter l'extraction de l'huile de ces graines lors des procédés de trituration. Le but de ce chauffage est de contrôler de manière fine l'humidité des graines oléagineuses et de les préparer à être triturées pour en extraire de l'huile. Ces dispositifs sont bien connus dans le domaine de l'extraction d'huiles végétales : Laisney et al., 1984 : chap. II.5 cuiseurs verticaux p116 - 120 et cuiseurs horizontaux p120-121 ; Unger E.H., 2011 pages 169-170 et Debryune I, 2001.

Un conditionneur est constitué d'une enceinte, le plus souvent un corps cylindrique horizontal ou vertical. Un conditionneur typique comprend un, et généralement plusieurs, éléments chauffants solides présentant, à l'intérieur de l'enceinte, une surface de contact avec la matière solide à chauffer qui permet la conduction de la chaleur. La matière à chauffer entre en contact direct avec l'élément de chauffage tout en étant brassée et/ou mélangée sur la surface de celui-ci. Le conditionneur comprend donc également des moyens de guidage pour brasser, mélanger et/ou malaxer la matière à chauffer sur ladite surface de contact, ou « surface chauffante ». Ces moyens permettent notamment d'homogénéiser et d'optimiser le chauffage.

La surface chauffante d'un conditionneur est maintenue à la température de chauffage souhaitée par différents moyens connus. Par exemple, la source de chaleur de la surface chauffante peut être une résistance électrique chauffante ou un fluide chauffé, de préférence un fluide caloporteur, tel qu'un liquide (par exemple de l'eau) ou un gaz (par exemple de la vapeur). Le fluide caloporteur circule en circuit fermé entre une source de chaleur et la surface chauffante du conditionneur. Le fluide caloporteur n'entre pas donc pas en contact avec la matière à chauffer. Ainsi le fluide caloporteur ne nécessite pas de traitement de filtration ou de lavage ; le chauffage de la surface chauffante s'effectuant exclusivement par conduction en circuit fermé. Avantageusement, la surface chauffante comprend, ou est constituée essentiellement d'un alliage métallique.

Les moyens de guidage de la matière sur ladite surface chauffante peuvent comprendre des pales, des palettes ou des raclettes, qui peuvent se déplacer en rotation ou en translation.

Il existe deux types de conditionneurs : les conditionneurs verticaux et les conditionneurs horizontaux. La taille des conditionneurs dépend des volumes de matière à traiter et du débit souhaité de production de matière traitée. Avantageusement, le débit est compris entre 1 et 10 tonnes / heure, de préférence entre 4 et 6 tonnes / heure.

Dans des conditionneurs horizontaux, où la plus grande dimension de l'enceinte est sa longueur, la surface chauffante peut comprendre une surface interne de l'enceinte. Dans ce cas, les matières à chauffer sont déplacées par un mélangeur interne, tel qu'un ruban hélicoïdal en mouvement. Dans le cas où l'enceinte comprend un tambour en rotation autour d'un axe horizontal, les matières à chauffer sont déplacées du fait des effets combinés de la gravité et de la rotation du tambour.

Dans les conditionneurs verticaux, où la plus grande dimension de l'enceinte est sa hauteur, la surface chauffante peut comprendre une série (c'est-à-dire au moins deux) d'éléments chauffants, comme des plaques (appelées également plateaux chauffants), superposés l'un au-dessus de l'autre et constituant des étages. Ces étages sont généralement de structure similaire. Le nombre d'étages varie généralement de 1 à 15. Un nombre d'étages de 5 à 9, en particulier de 6 à 8, par exemple 7, est particulièrement adapté au procédé selon l'invention.

Dans les conditionneurs verticaux à étages, la circulation de la matière est habituellement assurée par un système de malaxeurs en rotation fixé sur un arbre vertical traversant les étages. Les malaxeurs ont le plus souvent des ailettes d'agitation, par exemple de type palettes, qui permettent le brassage de la matière à traiter sur la surface chauffante de chaque étage. A chaque étage, une ouverture, de préférence amovible, permet de déplacer la matière à traiter d'un étage à un autre. Ces ouvertures peuvent être contrôlées par des portes.

Ainsi qu'il est connu, un conditionneur comprend également une ouverture d'entrée des matières à traiter, par exemple une vis d'alimentation, et une ouverture de sortie des matières traitées, par exemple une vis d'extraction, permettant de récupérer la matière traitée.

De nombreuses sociétés spécialisées proposent ces types de conditionneurs, et notamment les sociétés OLEXA, BUHLER, DESMET BALLESTRA, etc.

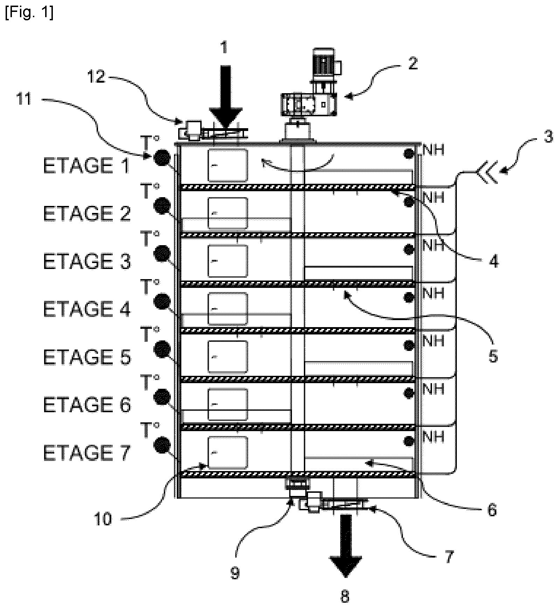

Un exemple de conditionneur utilisable pour la mise en oeuvre de l'invention est représenté à la figure 1. Une enceinte cylindrique verticale comprend des éléments chauffants tels que des plaques chauffantes horizontales (4). Ces plaques chauffantes (4) comprennent une double enceinte dans laquelle circule de la vapeur (3). Des pales (6) montées sur un axe rotatif (9) et entrainées par un moteur (2) permettent de guider les matières traitées. Le sous-produit animal brut (1) est introduit au sommet de l'enceinte par une vanne (12), par exemple une vanne papillon, et entre en contact avec la plaque chauffante (4) constituant l'étage 1. Lorsque le remplissage atteint un certain niveau haut (NH), celui-ci est arrêté. Une pale en rotation (6) entraine et déplace la matière brute sur la surface de la plaque chauffante (4) de l'étage 1. Avantageusement chaque étage est équipé d'une sonde thermique (11) permettant de mesurer la température à coeur de la matière traitée et d'une trappe d'accès (10). Une porte amovible (5) permet de faire basculer par gravité la matière traitée d'un étage du conditionneur vers l'étage inférieur. L'ouverture de cette porte peut être déclenchée lorsqu'un certain niveau de remplissage (par ex. NH) est atteint. Une vanne de sortie (7) permet de collecter le sous-produit animal traité thermiquement (8) une fois le traitement effectué.

De manière inattendue, l'utilisation de tels conditionneurs permet d'hygiéniser des sous-produits d'animaux sans que des modifications substantielles, par exemple par rapport à leur utilisation pour conditionner des graines, ne soient requises. Tout conditionneur de l'art antérieur peut être utilisé et en particulier ceux décrits ci-dessus. Les conditionneurs verticaux, et notamment ceux dont les éléments chauffants sont des plaques en alliage métallique, sont particulièrement préférés.

Aussi, le procédé selon l'invention comprend avantageusement une étape d'introduction d'un sous-produit animal dans un conditionneur thermique, une étape de traitement thermique par conduction comprenant une étape de contact direct du sous-produit avec une surface conductrice solide d'un élément chauffant du conditionneur et une étape de refroidissement du sous-produit traité thermiquement. Cette étape de contact est effectuée pour une durée permettant l'hygiénisation du produit et en particulier son chauffage à coeur à une température cible. En particulier une température minimale cible du sous-produit de 70°C doit avantageusement être atteinte. Il est également avantageux que la température minimale de chauffage à coeur du produit soit atteinte pour une période de temps, en particulier pour une durée minimale de 60 minutes. Cette température minimale de 70°C et cette durée minimale de 60 minutes répond à la réglementation sanitaire concernant l'hygiénisation d'un sous-produit animal, en vigueur à la date de dépôt de la présente invention. Ce couple température minimale / durée minimale peut être modulé en fonction de l'évolution de cette règlementation.

Une fois l'étape de traitement effectuée et l'hygiénisation obtenue, le sous-produit animal est avantageusement extrait de l'enceinte du conditionneur par des moyens appropriés tels que par exemple une vis d'extraction, ou simplement par gravité. Le sous-produit animal traité thermiquement est ensuite refroidi à l'aide d'un dispositif de refroidissement (refroidisseur).

Ainsi le procédé selon l'invention peut permettre d'hygiéniser les sous-produits animaux de manière efficace en termes énergétique et industriel sans provoquer de phénomènes d'encrassage et tout en permettant de limiter les émissions de composés volatiles, et ainsi les pollutions associées, notamment odorantes, pour l'environnement. Les odeurs émises lors des traitements de ces déchets animaux sont en effet un problème environnemental important.

Contrairement aux autres procédés d'hygiénisation industriels, et tels que décrits ci-avant, le chauffage des sous-produits animaux est effectué de manière prédominante par conduction.

Le transfert d'énergie par chaleur se réalise généralement par une combinaison de plusieurs modes de transfert : la conduction, due à la diffusion progressive de l'agitation thermique dans la matière ; la convection, transfert thermique qui accompagne les déplacements macroscopiques de la matière ; le rayonnement, qui correspond à la propagation de photons.

Contrairement aux procédés d'hygiénisation déjà existants, le sous-produit animal n'est pas chauffé par un contact direct avec de l'air chaud ou un flux d'air chaud et en particulier par un flux d'air chaud provenant de l'extérieur du dispositif (c'est à dire traversant le conditionneur). Alternativement ou additionnellement le conditionneur n'est pas chauffé par de l'air chaud dont la température est substantiellement supérieure à la température cible (par exemple supérieure à 80°C). De préférence, selon le procédé selon l'invention, le sous-produit animal n'est pas chauffé par convection ou radiation thermique.

Selon un aspect particulier de l'invention le traitement thermique est réalisé sans addition d'eau au sous-produit animal.

Selon un aspect particulier de l'invention le traitement thermique est réalisé à la pression atmosphérique.

Selon un aspect préféré du procédé selon l'invention le traitement thermique chauffe le sous-produit animal à une température à coeur supérieure ou égale à 70°C, de préférence entre 70°C et 90°C.

Selon un aspect préféré du procédé selon l'invention le traitement thermique est réalisé pendant au moins 60 minutes, ceci afin de correspondre aux minima réglementaires de temps et de température de traitement.

Selon un aspect préféré du procédé selon l'invention le traitement thermique est effectué dans une atmosphère de composition normale et avantageusement ne nécessite pas la mise en place d'une atmosphère inerte, ou plus inerte que l'atmosphère normale. Ainsi il peut être avantageusement requis de ne pas injecter de vapeur d'eau lors de la mise en oeuvre du procédé.

Il est évident que lors de la mise en place du procédé selon l'invention, il existera toujours nécessairement des phénomènes annexes de convection et de rayonnement thermique. Cependant ces phénomènes ne sont pas les modes de transfert prédominant dans un conditionneur, qui est reconnu dans le domaine comme un dispositif de chauffage par conduction. Au niveau industriel l'homme du métier sait reconnaître quel transfert d'énergie est le transfert d'énergie prévalant par la détermination de la quantité de chaleur Q associée à chaque type de transfert. Aussi un procédé de chauffage excluant l'utilisation de convection ou d'irradiation, exclu ce moyen à titre principal ou prépondérant et non à titre secondaire ou subsidiaire.

Avantageusement le sous-produit animal est transféré du conditionneur vers le dispositif de refroidissement par des moyens appropriés tels que par exemple une vis ou une trémie de liaison.

Il existe différentes méthodes de refroidissement qui permettent de ne pas dénaturer le sous-produit animal traité thermiquement. Il s'agit principalement de méthodes dans lesquelles le sous-produit traité thermiquement est refroidi par contact direct (de préférence de l'air) ou par contact indirect avec un fluide de refroidissement (fluide caloporteur frigorigène).

Parmi les méthodes de refroidissement par contact direct avec l'air (méthode de refroidissement par convection), on distingue :
- le refroidissement à contre-courant d'air : il existe des dispositifs de refroidissement verticaux à contre-courant d'air ou horizontaux à bande et à courant croisé. On peut citer par exemple des dispositifs vendus pas les fabricants STOLZ, GEELEN, CPM ;
- le refroidissement sur lit fluidisé qui permet un refroidissement d'un produit qui est convoyé par un système vibratoire en pente. L'air utilisé pour le refroidissement peut être de l'air ambiant ou de l'air préalablement refroidi. On peut citer par exemple des dispositifs vendus pas les fabricants COMESSA, SABE, SCHULE, JOEST ;
- le refroidissement par batch, où il s'agit d'alvéoles contenant un produit à refroidir et dont le sol est perforé permettant à un courant d'air de circuler dans le produit en arrivant du bas et repartant vers le haut. On peut citer par exemple des dispositifs vendus pas le fabricant GICOM.

Parmi les méthodes de refroidissement par contact indirect (i.e., par contact sur paroi froide), on distingue :
- les échangeurs thermiques qui permettent un transfert d'énergie entre un produit à l'état solide et au moins un fluide à des températures différentes. Le solide à refroidir et le fluide sont séparés par une surface de transfert, généralement métallique. Dans ces systèmes indirects, l'échange frigorifique repose sur un fluide réfrigéré qui circule en circuit fermé dans les échangeurs. Dans la majorité des cas, les fluides sont à l'état liquide ou gazeux (e.g., eau, air). Les échangeurs de chaleur tubulaires sont particulièrement adaptés à cette méthode de refroidissement. On peut citer par exemple des dispositifs vendus pas les fabricants SERMIA, THERMOFIN.

Selon un aspect préféré du procédé de l'invention, le dispositif de refroidissement est un échangeur de chaleur tubulaire à double enveloppe (interne et externe) comprenant un rotor et un stator, où l'enveloppe externe contient un fluide réfrigéré (e.g., eau glycolée, hydrofluorocarbones) à une température généralement comprise entre -10°C et +10°C. Le produit à refroidir, entrainé par un rotor (e.g., un système de vis d'Archimède), passe à travers le stator de l'échangeur et échange ses calories par contact indirect avec le fluide réfrigéré contenu dans l'enveloppe externe. Le produit ressort ainsi en ayant été refroidi. Ce dispositif est particulièrement avantageux dans la mesure où, le produit à refroidir circulant à l'intérieur du tube, le dégagement d'odeur désagréable est limité, notamment pour les opérateurs et le voisinage. Une installation de désodorisation peut également être prévue mais n'est pas essentielle. Le produit n'est pas dénaturé car il n'y a pas de contact direct avec le fluide réfrigéré. Le risque de reprise de contamination par des microorganismes est par ailleurs limité du fait du fonctionnement en circuit fermé et d'un temps de séjour court.

Au niveau industriel, l'homme du métier sait implémenter un dispositif de refroidissement d'une matière solide. De préférence, ce dispositif est un échangeur de chaleur tubulaire à double enveloppe comprenant un rotor et un stator, où l'enveloppe externe contient un fluide réfrigéré, tel qu'un liquide réfrigéré.

Le sous-produit animal, à traiter ou après son traitement, contient généralement une certaine quantité de poussières. Aussi, de manière préférée, la méthode et/ou le dispositif selon l'invention comprend au moins un moyen et/ou une étape pour contrôler, réduire ou supprimer la quantité de poussières présente. Ce dépoussiérage peut être effectué à n'importe quelle étape du traitement et peut comprendre une étape ou un moyen permettant de contrôler l'humidité du sous-produit, un système de transport fermé, une manutention automatisée, un dépoussiérage mécanique (filtration), la granulation et/ou l'agglomération du sous-produit.

L'ajout d'un agent agglomérant de poussière, en particulier après le traitement thermique du sous-produit animal, est recommandé car il évite la perte de produit. Cet agent agglomérant est le plus souvent un liquide tel que de l'eau et peut également comprendre un composé tensioactif. L'agent agglomérant liquide peut être administré au sous-produit animal par pulvérisation sous forme de gouttelettes ou de brouillard. Cet agent agglomérant peut avantageusement être mélangé au sous-produit animal dans un conditionneur de poussière (dépoussiéreur), c'est un dire une enceinte adaptée à l'adjonction et/ou mélange d'agent agglomérant au sous-produit animal, ce qui permet un dépoussiérage impliquant une faible consommation d'énergie. Le dépoussiéreur comprend avantageusement un mélangeur, comme, par exemple, une vis sans fin, qui permet d'améliorer l'agrégation des poussières en accélérant la pénétration de l'agent agglomérant dans le sous-produit.

Cette étape, ou ce dispositif, est avantageusement disposé(e) en dernier lieu, c'est-à-dire après le traitement du sous-produit animal par le conditionneur thermique, et éventuellement son refroidissement, et avant l'empaquetage ou le chargement du sous-produit traité dans un moyen de transport.

De tels dispositifs de dépoussiérage sont connus de l'homme de métier qui pourra les adapter aisément aux spécificités du dépoussiérage d'un sous-produit animal solide. En particulier, la quantité de liquide éventuellement ajoutée sera évidemment avantageusement minimisée pour que le sous-produit reste un produit sec ou déshydraté et pour éviter de favoriser un développement microbien dans le sous-produit ainsi traité.

On entend par sous-produit animal un produit d'origine animale, en particulier d'animal d'élevage, qui n'est pas destiné à la consommation humaine. Le sous-produit est avantageusement une matière de catégorie 2 conformément au règlement (CE) n° 1069/2009 du Parlement Européen du Conseil du 21 octobre 2009.

Avantageusement, le sous-produit animal à hygiéniser est du lisier ou le contenu de l'appareil digestif d'un animal, tel qu'un porcin, ovin, bovin, insecte et/ou volaille. Il peut être un effluent d'élevage qui peut être choisi dans le groupe constitué par la fiente de volaille (par exemple de poule), le fumier de volaille (par exemple de poule), le compost avicole (par exemple de poule), le compost de fumier de bovin, le frass d'insecte (fumier d'insecte), le lisier de bovin, le lisier de porc et leurs mélanges. De préférence, le sous-produit animal est de la fiente de volaille, du fumier de volaille et/ou du frass d'insecte. De manière particulièrement préférée, le sous-produit animal est de la fiente de volaille ou du fumier de volaille, très préférentiellement de la fiente de volaille, en particulier déshydratée (séchée).

Le procédé de l'invention permet d'hygiéniser et refroidir différents types de sous-produit animaux ayant un taux d'humidité varié. De préférence celui-ci est d'au plus 55% en masse ce qui correspond à un taux de matière sèche (MS) d'au moins de 45% en masse. De préférence encore celui-ci est d'au plus 40% en masse ce qui correspond à un taux de matière sèche (MS) d'au moins de 60% en masse. Aussi le procédé selon l'invention est particulièrement adapté à l'hygiénisation des fientes de poules pondeuses provenant d'élevages de type cage, d'élevages plein air ou de volières.

Les fientes, en particulier de poules pondeuses, peuvent être pré-séchées en élevage par différents systèmes notamment ceux utilisant l'air chaud des bâtiments d'élevage (séchage par tunnel ou par gaine, Derel et Aubert, 2008).

Le sous-produit animal à hygiéniser peut contenir de la paille, des copeaux de bois ou de la sciure de bois (par exemple fumier).

Le sous-produit animal à hygiéniser se présente avantageusement sous la forme particulaire, de broyats, de granulats ou de poudres, notamment irréguliers ou homogènes, mais dont la granulométrie est de préférence inférieure ou égale à 12 mm, et avantageusement inférieure ou égale à 8 mm, et encore plus avantageusement inférieure ou égale à 5 mm.

Selon une variante préférée du procédé selon l'invention, le sous-produit animal à hygiéniser présente un taux d'humidité faible et ou contrôlé. Il est avantageusement séché ou déshydraté.

Selon une variante préférée du procédé selon l'invention, le sous-produit animal à hygiéniser présente un taux de matière sèche d'au moins 45% en masse, de préférence d'au moins 65%, encore plus préférentiellement d'au moins 75%.

Selon une variante du procédé selon l'invention, le sous-produit animal à hygiéniser présente par exemple un taux de matière sèche inférieur à 95% en masse, ou inférieur à 90%, ou inférieur à 85%.

Selon une variante du procédé selon l'invention, le sous-produit animal à hygiéniser présente un taux de matière sèche compris entre 45% et 85% en masse.

Selon une variante préférée du procédé selon l'invention, le sous-produit animal à hygiéniser peut donc être utilisé brut ou séché, ceci selon la nature du sous-produit de départ.

Selon un aspect avantageux du procédé, il peut comprendre une étape préliminaire de séchage (déshydratation) du sous-produit animal à hygiéniser. Cette étape de séchage (déshydratation) peut être effectuée par évaporation ou par séparation solide-liquide, notamment mécanique (décanteur, filtre ou tamis, presse à vis ou centrifugeur, *etc..*). Une méthode communément utilisée en élevage de volaille est le séchage des sous-produits animaux par contact direct avec l'air chaud obtenu des bâtiments d'élevage.

Le sous-produit animal, une fois traité thermiquement et refroidi selon le procédé selon l'invention, est un sous-produit animal hygiénisé, c'est à dire qu'il ne présente plus de risques majeurs pour l'environnement et/ou les utilisateurs. En particulier, il a une charge substantiellement diminuée d'organismes pathogènes et en particulier d'*Escherichia coli*, d'entérocoques, de salmonelles et/ou d'oeufs d'helminthe, de préférence, d'*Escherichia coli* et d'entérocoques. Cette charge peut être inférieure à 1000 UFC/g, de préférence inférieure à 600 UFC/g et avantageusement inférieure à 300 UFC/g (par exemple inférieure à 100 UFC/g). Aussi, un aspect de l'invention porte sur un sous-produit animal hygiénisé caractérisé en ce qu'il est avantageusement obtenu par le procédé selon l'invention, et qu'il peut présenter une charge d'*Escherichia coli* ou d'entérocoques inférieure à 500 UFC/g, de préférence l'absence de salmonelle, et un taux de matière sèche avantageusement compris entre 80 % et 95% en poids.

De préférence, ledit sous-produit animal comprend des fientes de volaille (par exemple de poules pondeuses) ou du frass d'insecte hygiénisés.

De préférence, le sous-produit animal hygiénisé obtenu est sous la forme de poudre ou de particules libres ou détachées et avantageusement n'est pas sous la forme de granulés compressés, compactés ou enrobés (pellet).

Le sous-produit animal hygiénisé peut également être formulé et/ou granulé pour un usage ultérieur.

Un autre aspect de l'invention porte sur l'utilisation d'un conditionneur, en particulier d'un conditionneur tel que décrit précédemment, pour l'hygiénisation d'un sous-produit animal, en particulier d'un sous-produit tel que mentionné précédemment.

Un autre aspect de l'invention porte sur un sous-produit animal hygiénisé caractérisé en ce qu'il est obtenu par le procédé selon l'invention. Avantageusement le sous-produit hygiénisé est tel que décrit précédemment.

Encore un autre aspect de l'invention porte sur l'utilisation d'un sous-produit animal hygiénisé, tel que décrit précédemment comme fertilisant et/ou pour apporter de la matière organique au sol et aux cultures.

Un autre aspect de l'invention porte sur un système d'hygiénisation de sous-produit animal caractérisé en ce qu'il comprend un conditionneur, un dispositif de refroidissement et un sous-produit animal tels qu'ils sont décrits précédemment. De préférence, ledit dispositif de refroidissement est un échangeur de chaleur tubulaire à double enveloppe (interne et externe) comprenant un rotor et un stator, où l'enveloppe externe contient un fluide réfrigéré à une température généralement comprise entre -10°C et +10°C, tel que décrit précédemment.

Selon un autre aspect préféré de l'invention, le système d'hygiénisation est préférablement dépourvu de moyens pour rendre l'atmosphère interne dudit système plus inerte. Selon un aspect particulièrement préféré ledit système est dépourvu d'un générateur de vapeur d'eau et/ou d'un circuit de distribution de vapeur d'eau à l'intérieur du dispositif.

### Description des figures

[Fig. 1] est un schéma d'un conditionneur ou cuiseur, vertical typique pouvant être utilisé dans le procédé selon l'invention ;
[Fig. 2] est un graphique de suivi de la température à coeur des produits traités thermiquement de l'exemple 1 pendant 60 min dans le conditionneur.

### Exemple 1 :

### • Matériels et méthodes

Différents sous-produits animaux de catégorie 2 (risque sanitaire intermédiaire, règlement CE n°1069/2009) ont été testés : trois origines de fientes de volaille déshydratées (élevage cage, élevage plein air, élevage volière) et du frass d'insecte. Les produits se présentaient sous la forme broyée, ayant une granulométrie inférieure à 5 mm.

Les méthodes de références pour les différentes mesures sont les suivantes :
Pour les mesures agronomiques, les teneurs en matière sèche (méthode NF EN 13040), matière organique (méthode NF EN 13039), azote (méthode Dumas NF EN 13654-2), phosphore, potassium, calcium et magnésium (méthode adaptée de NF EN 13650, dosage selon NF EN ISO11885) ont été réalisées. Les méthodes NF sont celles disponibles à la date de dépôt de la demande.
Pour les mesures bactériologiques, 5 (T0 à T4) prélèvements (produits traités "T") de 25g par matière ont été effectués dans le conditionneur. Les teneurs en *Escherichia coli* (méthode NF ISO 16649-2), entérocoques (analyses sur milieu SLANETZ (conf sur gélose Bile-Esculine-Azide (B.E.A.)), méthode à 37°C pendant 48H), salmonelle (méthode NF EN ISO 6579-1) ont été mesurées.

En complément, des analyses d'humidité ont été réalisées à l'aide d'un humidimètre (Dessiccateur KERN) juste avant et après traitement pour évaluer l'impact sur le séchage du produit.

Tableau 1 : Caractéristiques agronomiques typiques de produits avant hygiénisation, teneurs moyennes et écart-type.

**[Tableau 1]**

| Données en g/kg produit brut | Fientes de poules pondeuses en cage (Levasseur et al. 2019) | Fientes de poules pondeuses en volière (Ponchant et al. 2018) | Fientes de poules pondeuses en plein air (Ponchant et al. 2018) | Frass - Fumier d'insecte |
|---|---|---|---|---|
| Matière sèche | 848 | 462 (101) | 574 (118) | 719 |
| Matière organique | 628 | 368 (91) | 316 (88) | 684 |
| Azote total | 39,5 | 20,2 (4,0) | 22,0 (9,6) | 31,5 |
| P₂O₅ | 37,8 | 13,6 (4,4) | 28,8 (8,6) | 32,8 |
| K₂O | 25,7 | 12,3 (4,4) | 20,8 (4,8) | 27,4 |
| CaO | 79,6 | 33,1 (10,9) | 79,3 (23,9) | 4,0 |
| MgO | 8,7 | 5,5 (1,4) | 9,2 (1,9) | 9,9 |

Tableau 2 : Caractéristiques bactériologiques des produits testés avant hygiénisation (2 échantillons par matière)

**[Tableau 2]**

| | Fientes de poules pondeuses Cage UFC / g | Fientes de poules pondeuses Volière UFC / g | Fientes de poules pondeuses Plein air UFC / g |
|---|---|---|---|
| E. coli | 123 000 | 680 000 | 50 500 |
| Entérocoques | <10 000 | <10 000 | 130 000 |

Le conditionneur (ou cuiseur) horizontal (Olexa, Arras, France) utilisé dans les exemples est composé de deux cylindres horizontaux imbriquées. La partie inférieure de chaque cylindre est chauffée par plusieurs résistances ; la chaleur étant transportée par une circulation de fluide thermique dans l'enveloppe du conditionneur. A l'intérieur du conditionneur, les matières sont mélangées par un ruban hélicoïdal en mouvement.

Environ 50kg de matières ont été utilisés pour chaque type de sous-produit. Le conditionneur a été chauffé au préalable à 100°C pour permettre d'atteindre la température cible de 70°C au coeur du produit. Le produit a été ensuite introduit dans le conditionneur et maintenu dans celui-ci pendant une heure.

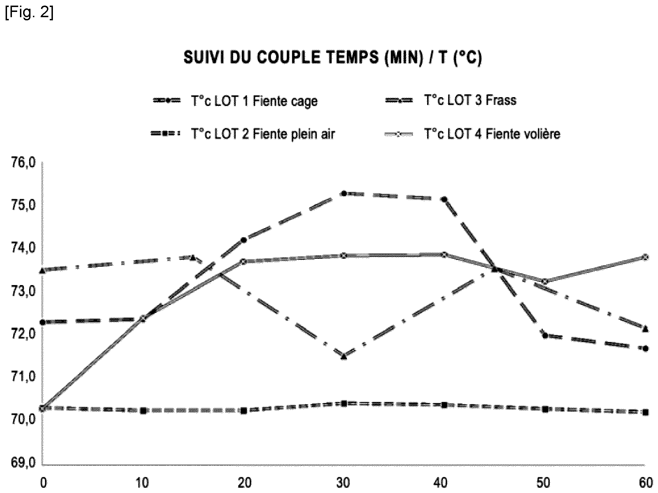

Des prélèvements réguliers par sonde thermométrique ont permis d'effectuer un suivi de température au sein du conditionneur. Les données sont reportées dans le graphique de la Figure 2. Le suivi des températures est simple à effectuer et le respect du couple temps/ température (70°C / 1hr) est bien respecté.

Le suivi des températures à coeur pendant la phase de montée en température des produits a permis de mettre en évidence une assez faible inertie thermique des fientes de volaille : montée en température et refroidissement rapides.

Les mesures d'humidité ont été réalisées sur les matières de départ et en sortie du dispositif. Les valeurs obtenues sont compilées dans le Tableau 3 :

Tableau 3 : Évolution de la matière sèche (MS) en masse après maintien des produits à 70°C pendant 1 heure

**[Tableau 3]**

| Lot | Typologie du lisier | Origine | MS initiale% | MS finale % | Différence % |
|---|---|---|---|---|---|
| 1 | Fiente de volaille séchée (déshydratée) | Elevage cage | 81,0 | 90,0 | 9,0 |
| 2 | Fiente de volaille séchée (déshydratée) | Elevage plein air | 76,5 | 81,8 | 5,3 |
| 3 | Frass fumier d'insectes | Élevage d'*Hermetia illucens* | 79,5 | 82,5 | 3,0 |
| 4 | Fiente de volaille séchée (déshydratée) | Elevage volière | 81,7 | 89,4 | 7,7 |

Les produits, qui présentaient initialement des niveaux de matière sèche plutôt élevés, entre 76,5 à 81,7 % en masse de matière sèche (MS), ont perdu entre 3 et 9 points d'humidité ce qui est satisfaisant avec une application industrielle (Tableau 3). La cible dans cet exemple est d'avoir des produits à environ 85% en masse de MS.

L'ensemble des valeurs agronomiques ont été mesurées et les valeurs obtenues sont compilées dans le Tableau 4 :

Tableau 4 : Résultats agronomiques après maintien des produits à 70°C pendant 1 heure

**[Tableau 4]**

| Données en g/kg produit brut | Fientes de poules pondeuses en cage | Fientes de poules pondeuses en volière | Fientes de poules pondeuses en plein air | Frass - Fumier d'insecte |
|---|---|---|---|---|
| Matière sèche | 885 | 893 | 811 | 852 |
| Matière organique | 635 | 638 | 604 | 719 |
| Azote total | 39,1 | 46,2 | 31,6 | 27,6 |
| P₂O₅ | 27,2 | 33,2 | 25,9 | 35,7 |
| K₂O | 29,8 | 36,6 | 23,6 | 34,0 |
| CaO | 88,6 | 98,1 | 73,5 | 0,8 |
| MgO | 10,1 | 12,5 | 9,1 | 7,9 |

Les résultats obtenus sont cohérents et traduisent uniquement la légère concentration des produits liée à la perte d'humidité (Tableau 4). Les résultats ne mettent pas en évidence d'autres phénomènes (réaction chimique, volatilisation de l'ammoniaque, ...).

Les mesures agronomiques et bactériologiques ont été réalisées sur les produits sortant (produits traités thermiquement).

Les résultats bactériologiques des 5 échantillons (T0-T4) sont tous conformes (Tableau 5) et respectent les seuils attendus par le processus de transformation. Les seuils de charge d'E. *coli* et entérocoque en sortie de procédé à respecter sont les suivants : charge en inférieure à 1000 UFC / g, sur 5 échantillons.

Tableau 5 : Synthèse des résultats bactériologiques (moyenne des 5 analyses par produit)

**[Tableau 5]**

| Produits | Fiente-Cage UFC / g | Fiente - Plein Air UFC / g | Frass UFC / g | Fiente-volière UFC / g | Réglementation - produit transformé (1069/2009) UFC / g |
|---|---|---|---|---|---|
| *E. coli* T0 | <100 | <100 | <100 | <100 | <1000 |
| *E. coli* T1 | <100 | <100 | <100 | <100 | <1000 |
| *E. coli* T2 | <100 | <100 | <100 | <100 | <1000 |
| *E. coli* T3 | <100 | <100 | <100 | <100 | <1000 |
| *E. coli* T4 | <100 | <100 | <100 | <100 | <1000 |
| Entérocoque T0 | <100 | <100 | <100 | <100 | <1000 |
| Entérocoque T1 | <100 | <100 | <100 | <100 | <1000 |
| Entérocoque T2 | <100 | <100 | <100 | <100 | <1000 |
| Entérocoque T3 | <100 | <100 | <100 | <100 | <1000 |
| Entérocoque T4 | <100 | <100 | <100 | <100 | <1000 |

Le procédé permet de réduire la charge d'E. *coli* et entérocoque de façon substantielle et acceptable aux fins de règlementation.

Enfin, les observations réalisées pendant les essais, en termes de poussière, odeur, buée, et encrassement n'ont pas permis de relever de problématiques particulières pour une application en conditions industrielles.

Il a également été observé l'absence de croutage (cimentation) de la matière traitée sur les parois du conditionneur.

En termes d'odeur, les produits initiaux présentent déjà une légère odeur qui s'est retrouvée pendant les essais. Cependant, le voisinage du cuiseur, qui ne comprend pas de dispositif de désodorisation, ne présentait, pour les opérateurs aucune exacerbation des odeurs.

### Exemple 2 :

Des fientes de volaille, du frass d'insecte et du compost avicole ont été traités selon la méthode de l'exemple 1. Les produits se présentaient sous la forme broyée, soit de petites particules (fiente et frass < 5mm (tamis)), soit, dans le cas de compost avicole, sous la forme de particules plus grossières. Dans tous les cas la matière de départ présentait une certaine hétérogénéité en particulier dans le cas du compost agricole.

Il est apparu que le procédé selon l'invention par l'utilisation d'un conditionneur affine la granulométrie et l'homogénéité du produit traité thermiquement. Les éléments du conditionneur « travaillent » la matière. De plus, un tamisage naturel s'opère lorsque le produit est très hétérogène (fiente traitée thermiquement, compost avicole) avec des particules fines qui vont sortir en premier et les particules grossières (mottes, paille, ...) qui vont sortir en dernier lorsque le procédé est réalisé en mode "*batch*"*.* Le frass offre une très belle présentation de produit avec une granulométrie fine et homogène et sans poussière.

### • Conclusion

Le procédé selon l'invention est polyvalent et peut être adapté pour hygiéniser tout type de sous-produit animal tel que décrit ci-dessus. De manière surprenante aucun problème d'encrassement n'a été observé lors de la mise en oeuvre de l'invention.

### Exemple 3 :

Des fientes de volaille ont été traitées selon la méthode de l'exemple 2. Le débit était de 5 tonnes / heure. La fiente traitée thermiquement ayant une température de 70°C a ensuite été refroidie à une température de 40°C en 3 min à un débit également de 5 tonnes / heure, en utilisant un échangeur thermique tubulaire à double enveloppe équipée d'une vis d'Archimède (rotor) entraînée par un moteur. L'enveloppe externe contenait de l'eau glycolée à une température de 2°C. La fiente de volaille ainsi traitée thermiquement et refroidie a été stockée à température ambiante avant utilisation. Aucun dégagement d'odeur désagréable ni condensation sur le tas n'ont été constatés.

### Références :

- Debruyne I., 2001. Soja : transformation et aspects industriels ; Techniques de l'Ingénieur Réf F6030 v1., 18p.
- Derel R. and Aubert C., 2008. Évolution de la qualité microbiologique de fientes de poules pondeuses après séchage et au cours du stockage, TeMA, vol. 7, 4-11.
- Laisney J., 1984. L'huilerie moderne. Paris, CFDT (Cie Française pour le développement des fibres textiles), 318p.
- Métras R., 2003. Utilisations et dangers sanitaires microbiologiques liés aux effluents d'élevage, Thèse de doctorat unique de médecine vétérinaire, Université Claude Bernard, France, 150p.
- Ponchant P. et al., 2018. Caractérisation des effluents de volailles, TeMA, vol 47, 35-41.
- Socrate A., 2000. Quels traitements pour les effluents des élevages industriels de volailles ? Synthèse bibliographique ENGREF.
- Unger E.H., 2011. Processing. In : Canola-Chemistry, Production, Processing and Utilization, edited by Daun J.K., Eskin N.A.M. and Hickling. D. AOCS Press, Urbana, Chapter 6, pp 163-188.
- Kim et al., 2012, Validating Thermal Inactivation of Salmonella spp. in Fresh and Aged Chicken Litter, Applied and Environmental Microbiology p. 1302-1307.
- Levasseur P. et al., 2019. Valorisation agronomique des effluents d'élevages de porcs, bovins, ovins, caprins, volailles et lapins. RMT Elevage et Environnement, Paris, 83 pages.

## Revendications

1. Procédé pour hygiéniser un sous-produit animal solide par traitement thermique, **caractérisé en ce que** le traitement thermique est effectué dans un conditionneur thermique,
ledit conditionneur thermique comprenant une enceinte, au moins un élément chauffant solide (4) présentant, à l'intérieur de l'enceinte,
- une surface de contact direct avec une matière solide à chauffer qui permet la conduction de la chaleur,
- des moyens pour maintenir ladite surface chauffante à une température de chauffage souhaitée, et
- des moyens de guidage (6) pour brasser, mélanger et/ou malaxer ladite matière solide à chauffer sur ladite surface de contact,
ledit procédé comprend une étape de chauffage par contact direct du sous-produit avec ladite surface conductrice dudit élément chauffant solide dudit conditionneur et où le sous-produit animal à hygiéniser présente un taux de matière sèche d'au moins 45% en masse,
et **en ce que** le sous-produit animal traité thermiquement présente une température d'au moins 70°C et est alors refroidi à l'aide d'un dispositif de refroidissement.

2. Le procédé selon la revendication 1, où le sous-produit n'est pas chauffé par contact direct avec de l'air chaud en particulier avec de l'air chaud provenant de l'extérieur du conditionneur.

3. Le procédé selon la revendication 1 ou 2, où le sous-produit animal à hygiéniser est un effluent d'élevage, de préférence choisi dans le groupe constitué par la fiente de volaille, le fumier de volaille, le compost avicole, le compost de fumier de bovin, le frass d'insecte, le lisier de bovin, le lisier de porc et leurs mélanges, de préférence encore, la fiente de volaille.

4. Le procédé selon l'une quelconque des revendications 1 à 3, où ledit traitement thermique chauffe le sous-produit animal à une température à coeur supérieure ou égale à 70°C, de préférence entre 70°C et 90°C.

5. Le procédé selon l'une quelconque des revendications 1 à 4, où ledit traitement thermique est réalisé pendant au moins 60 minutes.

6. Le procédé selon l'une quelconque des revendications 1 à 5, où ledit sous-produit animal à hygiéniser se présente sous la forme particulaire, de granulats ou de poudres, dont la granulométrie est de préférence inférieure ou égale à 12 mm, et avantageusement inférieure ou égale à 8 mm, et encore plus avantageusement inférieure ou égale à 5 mm.

7. Le procédé selon l'une quelconque des revendications 1 à 6, où le sous-produit animal à hygiéniser présente un taux de matière sèche d'au moins 65% et plus préférentiellement d'au moins 75%.

8. Le procédé selon l'une quelconque des revendications 1 à 7, où le traitement thermique est effectué sous atmosphère normale et/ou sans injection de vapeur d'eau.

9. Le procédé selon l'une quelconque des revendications 1 à 7, où le sous-produit animal traité thermiquement est refroidi à une température inférieure à 50°C en moins de 48 heures.

10. Sous-produit animal hygiénisé **caractérisé en ce qu'**il est obtenu par le procédé selon l'une quelconque des revendications 1 à 8, et **en ce que** le sous-produit animal est choisi dans le groupe constitué par la fiente de volaille, le fumier de volaille, le compost avicole et le frass d'insecte, et présente une charge d'Escherichia coli ou d'entérocoques inférieure à 500 UFC/g, l'absence de salmonelle, et un taux de matière sèche compris entre 80 % et 95% en poids.

11. Sous-produit animal hygiénisé selon la revendication 10, où ledit sous-produit animal hygiénisé est sous la forme de poudre ou de particules libres ou détachées.

12. Système d'hygiénisation de sous-produit animal **caractérisé en ce qu'**il comprend un conditionneur thermique, un dispositif de refroidissement et un sous-produit animal solide à hygiéniser (1), ledit conditionneur thermique comprenant :
- une enceinte,
- au moins un élément chauffant solide (4) présentant, à l'intérieur de l'enceinte, une surface de contact direct avec une matière solide à chauffer qui permet la conduction de la chaleur,
- des moyens pour maintenir ladite surface chauffante à une température de chauffage souhaitée, et
- des moyens de guidage (6) pour brasser, mélanger et/ou malaxer ladite matière solide à chauffer sur ladite surface de contact.

13. Système d'hygiénisation selon la revendication 12, où le sous-produit animal à hygiéniser (1) présente un taux de matière sèche d'au moins 45% en masse.

14. Système d'hygiénisation selon la revendication 12 ou la revendication 13, où le système qui comprend une atmosphère interne et est dépourvu de moyens pour rendre ladite atmosphère plus inerte.
